# EUROPEAN PATENT APPLICATION

(11) **EP 1 967 613 A1**
(43) Date of publication of application: **10.09.2008**
(21) Application number: 08151873.0
(22) Date of filing: 25.02.2008
(51) Int. Cl.: C23F 1/36

(54) **Apparatus for satinizing and finishing manufactured articles preferably made of aluminum**

(30) Priority: 28.02.2007 IT MO20070064
(71) Applicant: ITALTECNO S.R.L., 41100 Modena MO (IT)
(72) Inventor: Dalla Barba, Walter, 41100, Modena (IT); Battigelli, Angelo, 33010, Tavagnacco, Fraz. Cavalicco UD (IT)
(74) Representative: Modiano, Micaela Nadia

(57) **Abstract**

An apparatus (1) for satinizing and finishing manufactured articles preferably made of aluminum, which comprises at least one satinizing chamber (2) provided with at least one inlet (3) for a manufactured article (M) to be satinized and at least one outlet (4) for the satinized/finished manufactured article (M), means (5) for conveying the manufactured article (M) from the inlet (3) to the outlet (4). The apparatus further comprises means (7) for dispensing at least one pressurized abrasive liquid for satinizing the manufactured article (M) which advances from the inlet (3) to the outlet (4) inside the chamber (2).

## Description

The present invention relates to an apparatus for satinizing and finishing manufactured articles preferably made of aluminum, particularly profiled manufactured articles or extruded articles made of aluminum.

The production of profiled elements and various manufactured articles made of aluminum generally entails satinizing as the final step of the process. Satinizing is used to reference a particular surface treatment which is adapted to eliminate any defects caused by the production cycle of the manufactured articles, particularly extrusion lines, and also to finish aesthetically the manufactured articles, giving them the chosen degree of matting.

An appropriately provided reference parameter for indicating the degree of satinizing achieved has in fact been introduced in the specific sector of the treatment of aluminum manufactured articles. This parameter is indeed known as "matting index" according to international conventions.

To satinize aluminum manufactured articles it is known to use baths in a chemical solution, in which the manufactured articles are immersed, and which after a given time, for example comprised between 15 and 20 minutes, gives the manufactured article the chosen level of matt finish. The chemical solution is generally composed of a base of free caustic soda, in an amount of 70-100 g/l, and an amount of dissolved aluminum in an amount comprised between 100 and 150 g/l, with the addition of 10 to 20 g/l of stabilizing additives. The chemical solution is then kept at a temperature of approximately 55°C. During immersion of the manufactured articles, the following reaction occurs between the aluminum and the caustic soda:

Al + 2NaOH + H₂O → 2NaAlO₂ + 3H₂.

By way of this reaction, a removal of aluminum occurs on the surface of the manufactured articles which, for the parameters cited above, is equal to approximately 160 g per m² treated.

The use of baths of this type, in addition to being economically onerous, also has a high environmental impact, since these baths generated by the satinizing process lead to waste products which are difficult to recover and/or dispose.

The problems that arise from these first known types of satinizing apparatus are solved partly by a second known type of apparatus for satinizing and finishing manufactured articles preferably made of aluminum, which comprises a box-like body which comprises a closed satinizing chamber inside which the manufactured articles to be satinized pass.

In particular, the manufactured articles are satinized/finished by a mechanical treatment of the surface, no longer a chemical one.

The apparatus is provided with at least four turbines for spraying granular material, generally of the type of iron powder, with dimensions which can vary according to requirements between 30 and 500 µm. Each turbine comprises a nozzle for dispensing the granular material, which is arranged within the satinizing chamber.

The manufactured articles that transit within the satinizing chamber are struck by the jet of iron powder and the surface is thus abraded mechanically to a limited depth, assuming the chosen degree of satinizing and uniformity.

A screen and means for recovering the granular material are provided on the bottom of the satinizing chamber.

These devices for satinizing and finishing manufactured articles made of aluminum of a known type are in any case not free from drawbacks, which include the fact that the use of turbines to dispense granular material entails considerable equipment costs and considerable space occupation.

Moreover, another drawback of known apparatuses for satinizing and finishing manufactured articles made of aluminum is that they have a short life of the granular material, such as iron powders, used for mechanical satinizing of the manufactured articles; after impact with the manufactured article, the material in fact has deformations of its original shape which decrease its efficiency as the cycles of reuse increase and therefore it is necessary to provide a step for restoring the granular material in the processing cycle of the manufactured article.

Further, the efficiency of the recovery of the granular material that is used is not high, since dust is formed which deposits on the walls of the satinizing chamber and thus becomes unusable. The screening process also has drawbacks linked to the dry nature of the dust caused by the consequent clogging of the meshes of the screens.

The aim of the present invention is to eliminate the drawbacks noted above of the background art, by providing an apparatus for satinizing and finishing manufactured articles preferably made of aluminum which allows to maintain low equipment costs and has reduced space occupation.

Within this aim, an object of the present invention is to improve the satinizing and finishing efficiency of the manufactured articles, allowing to eliminate formation of defects such as the imperfections caused by drawing or extrusion of said manufactured articles, be they excess material, burr or scratches, and ensuring uniformity in the degree of matt finish on the entire manufactured article.

Another object of the invention is to allow a continuous cycle of satinizing and finishing treatment with repeatable characteristics and high efficiency at each of such treatment cycles.

Another object of the invention is to use a material which is capable of abrading the manufactured articles and at the same time has high technical efficiency and easy recovery.

A further object of the present invention is to provide an apparatus which is simple, relatively easy to provide in practice, safe in use, effective in operation, and has a relatively low cost.

This aim and these and other objects which will become better apparent hereinafter are achieved by the present apparatus for satinizing and finishing manufactured articles preferably made of aluminum, which comprises at least one satinizing chamber provided with at least one inlet for a manufactured article to be satinized and at least one outlet for the satinized/finished manufactured article, means for conveying said manufactured article from said inlet to said outlet, characterized in that it comprises means for dispensing at least one pressurized abrasive liquid for satinizing said manufactured article which advances from said inlet to said outlet inside said chamber.

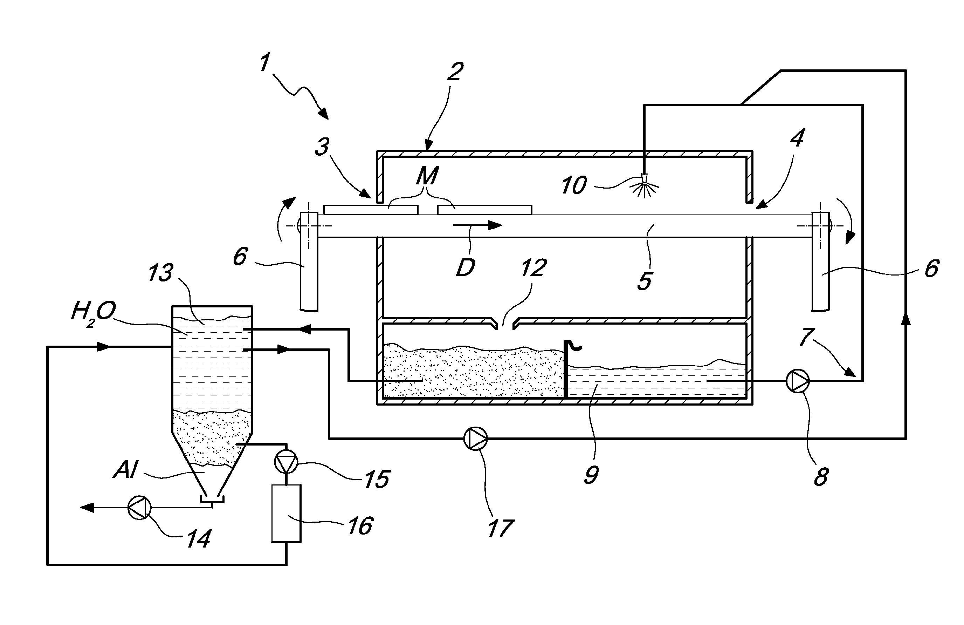

Further characteristics and advantages of the present invention will become better apparent from the following detailed description of a preferred but not exclusive embodiment of an apparatus for satinizing and finishing manufactured articles preferably made of aluminum, illustrated by way of non-limiting example in the accompanying drawings, wherein the sole Figure is a schematic view of the apparatus according to the invention.

With reference to the figure, the reference numeral 1 generally designates an apparatus for satinizing and finishing manufactured articles preferably made of aluminum, generally designated by the reference letter M.

The apparatus 1 comprises at least one satinizing chamber 2, which is provided with at least one inlet 3 for the manufactured article M to be satinized and at least one outlet 4 for the satinized and finished manufactured article M. In the preferred but not exclusive embodiment, the inlet 3 and the outlet 4 are mutually aligned so as to define a direction D for the advancement of the manufactured article.

The manufactured article M is arranged preferably but non-limitatively so that its longitudinal axis is substantially parallel to the advancement direction D defined from the inlet 3 to the outlet 4.

Advantageously, the conveyance means comprise a conveyor 5, for example of the continuous type, such as a roller conveyor or other technically equivalent device, which is supported by a frame 6 provided with elements for resting on the ground, which are not shown in the figure.

The apparatus 1 comprises means 7 for dispensing at least one abrasive liquid under pressure for satinizing the manufactured article M which advances along the direction D from the inlet 3 to the outlet 4 inside the chamber 2.

The dispensing means comprise means 8 for drawing the liquid from at least one tank 9 to at least one nozzle 10 for dispensing the abrasive liquid under pressure.

In particular, the nozzle 10 is arranged so as to face the manufactured article M inside the chamber 2 and is fixed to the internal walls of the chamber.

The withdrawal means 8, for example, are of the type of a conventional high-pressure pump; in particular, they dispense the liquid at a pressure comprised between 400 and 2000 bars.

The nozzle 10 further comprises means for adjusting the flow-rate, pressure and direction of the jet of liquid under pressure.

In particular, the abrasive liquid for satinizing the manufactured article M is of the type comprised in the group which includes an aqueous suspension of pumice in granules, an aqueous suspension of alumina in granules or other technically equivalent product, for example, the alumina and pumice having particles with dimensions which can vary between 30 and 500 µm. As an alternative, the liquid for satinizing/finishing the manufactured article M can be constituted simply by a jet of water under pressure.

The apparatus 1 advantageously comprises a plurality of nozzles 10 which face the manufactured article M and are arranged radially to it.

In a preferred but not exclusive embodiment, the apparatus 1 comprises four nozzles 10, which are arranged at 90° to each other to dispense the liquid onto all of the faces of the manufactured article M which advances along the direction D inside the chamber 2; however, a different arrangement of the nozzles 10 is not excluded.

Further, the apparatus 1 comprises a plurality of means 8 for withdrawing the liquid, each of which is connected to at least one of the nozzles 10.

Finally, the apparatus 1 comprises a vat 11 for recovering the satinizing liquid, which is arranged below the chamber 2.

The vat 11 comprises a discharge port 12, which is arranged on the bottom of said vat and serves the tank 9 to collect the satinizing liquid.

Advantageously, the dispensing means are of the type of a closed circuit for recovering the satinizing liquid.

In a preferred embodiment, the apparatus 1 comprises means for separating the liquid from the suspended solid fraction, such as the pumice/alumina granules, which are connected to the tank 9.

The separation means comprise a settling tank 13, for example provided with means for vibration, within which separation between the water and the suspended particles and gravimetric separation between the pumice/alumina used for satinizing and the aluminum abraded from the surface of the manufactured article occur.

The apparatus 1 is provided with first means 14 for extracting the abraded aluminum deposited on the bottom of the settling tank 13, which is transferred for recovery/disposal.

The apparatus 1 further has second means 15 for extracting the pumice/alumina in granules and means 16 for pulverizing said pumice/alumina, for example in a conventional centrifuge, which is shown only schematically in the figure. The pulverizing means 16 are interposed advantageously between the second extraction means 15 and the nozzles 10, the injection of the pumice/alumina in granules being performed preferably but non-limitatively downstream of the withdrawal means 8 and upstream of the nozzles 10.

Finally, the settling tank 13 has third means 17 for extracting the cleared liquid which serve the tank 9.

Inside the vat 11 there can be mixers, not shown because they are of a known type, for maintaining the rheological characteristics of the satinizing liquid.

The operation of the present invention is as follows.

The conveyor 5 conveys the manufactured article M into the chamber 2. Once the manufactured article arrives at the nozzles 10, the withdrawal means 8 send to said nozzles, which face the manufactured article M, the pressurized satinizing liquid.

The nozzles 10 dispense the liquid at high pressure so that the granules of pumice or alumina or another technically equivalent material in powder or aqueous suspension, injected upstream of said nozzles or alternatively already suspended within the tank 9, strike the surface of the manufactured article M, abrading it mechanically to the chosen degree of satinizing and finishing.

The finished manufactured article M then exits from the outlet 4 and is ready for subsequent treatment.

In practice it has been found that the described invention achieves the intended aim and objects, and in particular the fact is stressed that the apparatus as conceived, by replacing the use of turbines with different pumping means, allows to maintain low plant costs and further has reduced space occupation.

Moreover, it has been observed that the apparatus for satinizing and finishing manufactured articles preferably made of aluminum according to the invention allows to improve the satinizing and finishing efficiency of the manufactured articles, allowing to eliminate production defects such as imperfections caused by drawing or extrusion of the manufactured articles, be they excess material, burr or scratches and ensuring uniformity in the degree of matt finish on the entire manufactured article.

Further, the apparatus as described allows to obtain a continuous satinizing and finishing treatment cycle with repeatable characteristics and high efficiency at each of the treatment cycles.

Moreover, the fact is stressed that the apparatus as conceived, by using pumice in suspension as a granular material, has high efficiency in the recovery of the pumice and reduced losses due to wear of the granular material, reducing the overall operating costs of the apparatus.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements without thereby abandoning the protective scope of the appended claims.

The disclosures in Italian Patent Application No. MO2007A000064 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus for satinizing and finishing manufactured articles preferably made of aluminum, comprising at least one satinizing chamber provided with at least one inlet for a manufactured article to be satinized and at least one outlet for the satinized/finished manufactured article, means for conveying said manufactured article from said inlet to said outlet, **characterized in that** it comprises means for dispensing at least one pressurized abrasive liquid for satinizing said manufactured article which advances from said inlet to said outlet inside said chamber.

2. The apparatus according to claim 1, **characterized in that** said dispensing means comprise means for drawing said liquid from at least one reservoir to at least one nozzle for dispensing said abrasive liquid under pressure, said nozzle facing said manufactured article.

3. The apparatus according to claim 2, **characterized in that** said withdrawal means are of the type of a high-pressure pump.

4. The apparatus according to one or more of the preceding claims, **characterized in that** said nozzle comprises means for adjusting the flow-rate, pressure and direction of the jet of liquid under pressure.

5. The apparatus according to one or more of the preceding claims, **characterized in that** said liquid comprises at least one liquid comprised in the group which includes an aqueous suspension of pumice in granules and an aqueous suspension of alumina and water.

6. The apparatus according to one or more of the preceding claims, **characterized in that** it comprises a plurality of nozzles which face said manufactured article.

7. The apparatus according to one or more of the preceding claims, **characterized in that** it comprises a plurality of said means for drawing said liquid, each of which is connected to at least one of said nozzles.

8. The apparatus according to one or more of the preceding claims, **characterized in that** it comprises a vat for the recovery of said liquid which is arranged below said chamber and comprises a discharge port which is arranged on the bottom of said vat, for serving said tank for the collection of said liquid.

9. The apparatus according to one or more of the preceding claims, **characterized in that** it comprises means for separating the liquid from the suspended solid fraction which are connected to said tank, the separation means comprising at least one settling tank at least for separation between the water and said solid fraction.

10. The apparatus according to one or more of the preceding claims, **characterized in that** it comprises first means for extracting the abraded and separated aluminum deposited on the bottom of the settling tank, second means for extracting the pumice/alumina in granules, and means for pulverizing said pumice/alumina.

11. The apparatus according to claim 10 and one or more of the preceding claims, **characterized in that** said pulverizing means are interposed between said second extraction means and said nozzles for the injection of said pumice/alumina in granules downstream of said withdrawal means and upstream of said nozzles.

12. The apparatus according to one or more of the preceding claims, **characterized in that** it comprises third means for extracting the cleared liquid from the surface of said settling tank to serve said tank.

13. Use of an aqueous solution of pumice in granules for the satinizing and finishing treatment of manufactured articles preferably made of aluminum.

14. The use of an aqueous suspension of pumice in granules according to claim 13, **characterized in that** said granules have dimensions comprised between 30 and 500 µm.
